# EUROPÄISCHE PATENTSCHRIFT

(11) **EP 2 332 249 B1**
(45) Veröffentlichungstag und Bekanntmachung des Hinweises auf die Patenterteilung: **13.05.2020**
(21) Anmeldenummer: 09756122.9
(22) Anmeldetag: 17.08.2009
(51) Int. Cl.: H02P 6/18, H02P 6/20, H02P 1/46, H02P 6/185

(54) **BESTIMMUNG DES ROTORWINKELS EINER SYNCHRONMASCHINE IM STILLSTAND MIT HILFE VON ITERATIVEN TESTPULSEN**
DETERMINATION OF THE ROTOR ANGLE OF A SYNCHRONOUS MACHINE AT REST USING ITERATIVE TEST PULSES
DÉTERMINATION DE L'ANGLE DE ROTOR D'UNE MACHINE SYNCHRONE À L'ARRÊT À L'AIDE D' IMPULSIONS DE TEST ITÉRATIVES

(30) Priorität: 25.09.2008 DE 102008042360
(43) Veröffentlichungstag der Anmeldung: 15.06.2011
(73) Patentinhaber: Robert Bosch GmbH, 70442 Stuttgart (DE)
(72) Erfinder: VOLLMER, Ulrich, 73266 Bissingen (DE)
(86) Internationale Anmeldenummer: PCT/EP2009/060589
(87) Internationale Veröffentlichungsnummer: WO 2010/034568

(56) Entgegenhaltungen:
- WO-A-03/036788
- WO-A-2005/046043
- US-A1- 2008 067 964

## Beschreibung

### Stand der Technik

Die Erfindung geht aus von Winkelerfassungsmechanismen für Elektromotoren und insbesondere für Synchronmaschinen.

Elektrische Motoren werden für eine Vielzahl von Anwendungen gebraucht, wobei abhängig von der Anwendung die Rotorstellung und nicht nur die Drehzahl selbst relevant ist. Insbesondere beim Anschalten von elektrischen Maschinen ist die Erfassung der Stellung des Rotors relevant, da die Rotorlage relativ zum Statormagnetfeld unmittelbaren und starken Einfluss auf den Betrag und das Vorzeichen des erzeugten Drehmoments hat. Insbesondere bei Synchronmaschinen, in denen zwischen Rotor und Starter im Wesentlichen keine Drehzahldifferenz ("Schlupf") vorgesehen ist, ist die korrekte Winkelerfassung der Rotorlage für den Betrieb relevant. Unter Umständen kann eine Abweichung von nur wenigen Grad einen sehr starken Unterschied hinsichtlich des Drehmoments hervorrufen. In Synchronmaschinen wird ein umlaufendes Magnetfeld durch eine Vielzahl von zueinander versetzten Statorwicklungen erzeugt, wobei der Rotor eine fest eingeprägte Magnetisierungsrichtung aufweist. Grundsätzlich kann das Magnetfeld des Rotors durch einen Permanentmagneten, durch einer Erregerwicklung oder durch eine Kombination hiervon erzeugt werden.

Es ist bekannt, zur Winkelerfassung separate Sensoren zu verwenden, beispielsweise induktive oder optische Sensoren. Zudem erfordert der Einsatz von separaten Sensoren zusätzlichen Bauraum, zusätzliche Kosten, eigene Zuleitungen, zusätzliche Herstellungsschritte und weiteres. Ferner bergen zusätzliche Komponenten grundsätzlich immer die Gefahr, dass diese zusätzliche Fehlerquellen vorsehen.

Daher sind Verfahren und Vorrichtungen bekannt, die die Rotorlage eines Motors mittels der Wicklungen und des Rotors erfassen, ohne dass zusätzliche Sensoren notwendig sind.

Die Druckschrift DE 10 2006 004 166 bestimmt ein Verfahren zur Bestimmung der Rotorlage eines elektronisch kommutierten Motors, wobei die verschiedenen Sättigungsgrenzen des Rotors, die in verschiedenen Rotorrichtungen vorliegen, zur Erfassung der Rotorposition verwendet werden. Hierzu werden Anstiegszeiten bis zu bestimmten Grenzwerten erfasst, aus denen sich die Sättigung des Rotoranteils erfassen lässt, der von dem Magnetfeld erfasst wird, das von einer zu der Richtung zugehörigen Statorwicklung erzeugt wird. Aus der Steigung der Strangströme des Stators wird die Lage des Rotors erfasst, da der Rotor eine winkelabhängige Sättigung aufweist. Zum einen ist das Verfahren aufwändig, da die Winkellage auf der Kombination einer Vielzahl von verschiedenen Anstiegszeiten beruht, die die jeweilige Sättigung wiedergeben, und zum anderen, da die Auflösung durch den Winkelversatz zweier verschiedener Statorwicklungen definiert ist, das heißt beispielsweise 60°. Somit sieht diese Druckschrift nur eine Zuordnung zu bestimmten Winkelsektoren vor, jedoch keine präzisere Winkelerfassung.

Die Druckschrift AT 397727 B beschreibt ein Verfahren, das mittels Spannungspulsen den Rotorwinkel bestimmt. Hierbei werden Induktivitäten, die sich durch Stromimpulse und zugehörigen induzierten Spannungen ergeben, einem sinusförmigen Verlauf der Induktivität entlang des Umfangs zugeordnet, um aus den ermittelten Induktivitätswerten und deren Ableitungen die aktuelle Position innerhalb des sinusförmigen Verlaufs zu ermitteln. Dies erfordert eine aufwändige Interpolation zur Zuordnung der Messwerte zu dem angenommenen sinusförmigen Induktionsverlauf und stellt somit hohe Anforderungen an eine Messdatenverarbeitungseinheit, die die Spannungs- und Stromimpulse auf den sinusförmigen Verlauf interpoliert. Ferner ergeben sich in der Position Ungenauigkeiten an Stellen, an denen sich die Induktivität nur gering mit dem Winkel ändert, das heißt beispielsweise bei +/- 90°.

Die oben genannten Verfahren zur Absolutwinkelerfassung bei stehenden Elektromotoren sind daher zum einen mit zusätzlichen Komponenten verbunden, oder sehen eine aufwändige Berechnung vor, die gleichzeitig mit einer geringen Genauigkeit und einem hohen Fehleranteil auf Grund externer Störfelder beaufschlagt sind. Insbesondere interpolationsbasierte Winkelerfassungen erfordern einen erheblichen Aufwand an komplexen Berechnungen, wobei die Interpolation auch bei geringen Messfehlern zu substantiellen Winkelfehlern führt.

Es ist daher eine Aufgabe der Erfindung, einen Mechanismus zum präzisen Erfassen der absoluten Winkellage für Elektromotoren vorzusehen, der sich mit geringem Aufwand an elektrischen Komponenten und mit einfachen Auswertungsmechanismen realisieren lässt.

### Offenbarung der Erfindung

Die Erfindung erlaubt eine präzise absolute Winkelbestimmung für elektrische Maschinen, insbesondere für Synchronmaschinen ohne zusätzliche Komponenten, und mit einer besonders vereinfachten Berechnungsweise. Das Verfahren lässt sich mit kostengünstigen Bauteilen umsetzen, da es nur eine geringe Rechenleistung benötigt, erreicht eine hohe Präzision, wird auf Grund einer Vielzahl von Messungen nur schwach von äußeren Störmagnetfeldern beeinflusst und ermöglicht eine nahezu beliebig genaue Auflösung der Winkelposition. Sowohl Aufbereitung der Messverfahren als auch die Erzeugung und Zuleitung der Messimpulse kann mit bereits bestehenden Vorrichtungen, die mit der elektrischen Maschine verbunden sind, vorgesehen werden. Die Erfindung erlaubt somit das genaue Erfassen der Winkelposition des Rotors im Stillstand, wodurch beim Anfahren bereits nach einer kurzen Messperiode das maximal mögliche Drehmoment erreicht werden kann. Das Verfahren erfordert geringe Kosten, einen geringen Bauraum und weist eine hohe Robustheit auf. In einer bevorzugten Ausführungsform erlaubt die Erfindung auch die eindeutige Erfassung der Winkellage bezüglich einer vollen 360°-Umdrehung ohne Zweideutigkeit in der 180°-Ausrichtung. Insbesondere erfordert das Verfahren keine aufwändige Interpolation oder Interpretation der Messwerte, sondern kann ausschließlich mit einfachen Vergleichsvorgängen und grundlegenden Rechenoperation vorgesehen werden. Insbesondere kann die Erfindung mittels Vergleichern und Vorrichtungen, die einen Winkelmittelwert bilden, ausgeführt werden, beispielsweise als auf einem Prozessor ablaufende Software. Ferner kann die Erfindung mittels einer festverdrahteten Schaltung mit einem Vergleicher, einem Addierer und einer Vorrichtung zum Halbieren eines Werts umgesetzt werden.

Die Erfindung basiert auf der Erfassung der Induktivität in verschiedenen Winkelrichtungen, die nicht nur durch die Ausrichtung einer Statorwicklung vorgegeben sind, sondern durch gezieltes Abfragen der Induktivität in einer beliebigen Winkelposition, wobei durch geeignete Kombination mindestens zweier Statorwicklungen eine beliebige Winkelposition abgefragt werden kann. Die Erfindung sieht vor, die richtungsbezogene Induktivität der Kombination aus Rotor und auf diese wirkende Statorwicklung(en) zu erfassen, wobei der Rotor in Umlaufrichtung anisotrop ist. Mit anderen Worten weist der Rotor entlang einer ersten Achse ein erstes magnetisches Verhalten auf, das sich von dem magnetischen Verhalten entlang einer zweiten, dazu verschiedenen Achse unterscheidet. (Beide Achsen sind senkrecht zur Rotationsachse des Rotors und schneiden diese). Diese Achsen können beispielsweise die d-Achse und die q-Achse sein, wobei die Erfindung jedoch nicht auf zweipolige Rotoren beschränkt ist. Vielmehr kann der Rotor grundsätzlich eine beliebige Anzahl an Magnetpolpaaren aufweisen. Die abgefragte Eigenschaft des Rotors ist die Induktivität, beziehungsweise der Fluss, der innerhalb des Rotorkernmaterials durch das anliegende äußere Magnetfeld (erzeugt durch den Stator) hervorgerufen wird. Prinzipiell wird ein äußeres Magnetfeld (durch den Stator) mit einer bestimmten Winkelrichtung angelegt, d.h. durch einen definierten Spannungsimpuls auf die Statorwicklung(en), und der daraus resultierende (dazu verzögerte) Strom wird erfasst, der sich gemäß: u(t) = L*(di/dt) verhält. Das Verhältnis dieser beiden Größen entspricht der Induktivität, die wiederum von der magnetischen Permeabilität bzw. von der magnetischen Suszeptibilität des Rotors(-materials) in dieser Richtung abhängt. Die effektive magnetische Permeabilität des Rotors in Abhängigkeit von dem Winkel ergibt sich durch das Material des Rotors, insbesondere durch Kombination verschiedener Materialien verschiedener magnetischer Permeabilität und insbesondere die Ausformung des Rotors, die nicht rotationssymmetrisch ist.

Ferner spielt die in der betreffenden Winkelrichtung vorherrschenden Sättigung eine Rolle, wobei die magnetische Permeabilität mit zunehmender Sättigung abnimmt. Mit anderen Worten erzeugt ein zusätzliches Magnetfeld nur eine geringe Zunahme an magnetischem Fluss im Material, wenn das Material bereits einer starken Vormagnetisierung ausgesetzt ist. Beispielsweise kann die Vormagnetisierung durch eine Erregerspule (oder durch einen Permanentmagneten oder einer Kombination hiervon) des Rotors vorgesehen werden, wobei die zusätzliche Magnetfeldkomponente von außen durch den Stator vorgegeben wird, die sich entweder, abhängig von der Ausrichtung, zu der Vormagnetisierung hinzuaddiert, oder diese verringert. Verringert das von außen angelegte Magnetfeld den Fluss innerhalb des Materials, so ergibt sich eine höhere Induktivität als in entgegengesetzter Richtung, wenn das äußere Magnetfeld sich zu dem Rotormagnetfeld (welches die Vormagnetisierung angeht) hinzuaddiert. Durch Aussenden eines Magnetisierungsimpulses durch den Rotor in zwei entgegengesetzte Richtungen kann somit die Halbraumausrichtung des Rotors (oder im allgemeinen Nord-Südausrichtung eines Polpaars einer beliebigen Zahl von Polpaaren) exakt erfasst werden.

Erfindungsgemäß werden mehrere Magnetisierungsimpulse durch den Rotor in verschieden Winkelrichtungen abgegeben, und der (stehende) Rotor wird magnetisiert. Durch die Pulsform ergibt sich in dem Stator eine induzierte Spannung, aus der sich die effektive relative Permeabilität oder eine andere magnetisch anisotrope Größe des Rotors erfassen lässt. Die erfassten Spannungen werden miteinander verglichen und es wird die kleinste bzw. zweitkleinste oder die größte bzw. zweitgrößte Spannung und die zugehörigen beiden Winkel ermittelt. Je nach Rotorart (permanent erregt oder mit Erregerwicklung) entspricht entweder der Winkel des Minimums aller Minima der Ausrichtung der d-Achse (bei permanenterregten Maschinen), oder das Maximum aller Maxima entspricht der Ausrichtung der d-Achse der elektrischen Maschine (bei Maschinen mit Erregerwicklung). Einfache Vergleichsoperationen ergeben die Winkelrichtungen der zwei maximalen oder minimalen (im Weiteren extremen) Winkelausrichtungen, wobei die Erfindung vorsieht, innerhalb der Winkelspanne, die durch die zwei Winkelrichtungen definiert ist, eine Induktivitätsmessung durchzuführen. Mit anderen Worten wird ein (Zwischen)-Winkel vorgesehen, der zwischen der stärksten Extremstelle (kleinstes Minimum oder größtes Maximum) und der zweitstärksten Extremstelle (zweitkleinstes Minimum oder zweitgrößtes Maximum) liegt, und es wird vom Rotor ein Magnetfeldpuls erzeugt, der in Richtung dieses Winkels verläuft. Der sich ergebende Wert wird wiederum mit den bereits vorhandenen Werten (oder mit Werten, die zusammen mit diesem Wert erfasst wurden) verglichen, und es ergibt sich eine schmalere Winkelspanne zwischen den nun vorliegenden beiden stärksten Extrema.

Diese Winkelspanne kann nun wieder geteilt werden, um wieder zwischen zwei verschiedenen Winkelspannenunterteilungen unterscheiden zu können, von denen die Winkelspannenunterteilung ausgewählt wird, die von den jeweils beiden stärksten Extrema begrenzt wird. Eine Winkelspanne wird unterteilt, indem ein weiterer Winkel, der zwischen den beiden Winkelspannenenden liegt, vorgesehen wird, beispielsweise als arithmetisches Mittel, und die sich ergebenden beiden Winkelspannenunterteilungen (linke Hälfte und rechte Hälfte) können miteinander verglichen werden, indem beispielsweise die Summe oder im Allgemeinen eine Kombination des Spannungsbetrags der beiden Winkel als Maß herangezogen wird, die den beiden Grenzen der Winkelspannenunterteilung entsprechen. Grundsätzlich wird eine Winkelspanne bzw. ein Winkelsektor in mindestens zwei Unterteilungen eingeteilt, und die Messung oder der Vergleich wird für beide Hälften wiederholt, um den größeren oder den kleineren der beiden Winkelsektoren zu erfassen. Gemäß einer Ausführung wird nur eine Messung entlang des Winkels durchgeführt, der zwischen den beiden Grenzwinkeln des entsprechenden Winkelsektors liegt, und zum Vergleich werden die Messergebnisse der beiden Grenzwinkel von früheren Messungen herangezogen. Alternativ kann nach dem Unterteilen eines durch Grenzwinkel festgelegten Winkelsektors die Messung auch an den beiden Grenzwinkeln wiederholt werden, so dass Messungen an den beiden Grenzwinkeln und entlang des Zwischenwinkels im gleichen Durchgang durchgeführt werden, vorzugsweise direkt nacheinander bzw. innerhalb einer vorgegebenen Zeitspanne.

Die Messung wird durchgeführt, indem ein einzelner Spannungspuls in die Statorwicklungen abgegeben wird, so dass der Spannungsimpuls in den Statorwicklungen einen Stromfluss erzeugt, der zu einem Magnetfeld entlang einer vorbestimmten Richtung führt. Um den Winkel genau zu definieren, wird entweder eine einzelne spezifische Statorwicklung angesteuert, oder, um Winkel zu erreichen, die zwischen zwei verschiedenen Statorwicklungen liegt, können diese beiden Wicklungen (oder mehrere Wicklungen) mit Spannungspulsen beaufschlagt werden, die in Kombination zu einer Magnetfeldrichtung führen, die dem gewünschten Winkel entspricht. Vorzugsweise ist die Fläche des Spannungspulses im Zeitdiagramm, die Verlaufsform des Spannungspulses und der Betrag des Spannungspulses für alle Messungen gleich. Im Falle von Spannungspulsen, die auf mehrere Wicklungen verteilt werden, um so einen Zwischenwinkel zu erreichen, entspricht vorzugsweise das sich addierende Magnetfeld hinsichtlich Betrag, Verlauf und Fläche des Zeitverlaufs einem Magnetfeld, das von einer einzelnen Wicklung abgegeben wird. Mit anderen Worten wird der Spannungspuls auf mehrere Statorwicklungen aufgeteilt, die im Ergebnis jedoch den gleichen Feldimpuls erzeugen wie eine einzelne Wicklung. Grundsätzlich kann anstatt eines einzelnen Spannungspulses eine vordefinierte Folge von Spannungspulsen verwendet werden, beispielsweise ein Sinussignal, das mit einem (breiten) Rechteckimpuls moduliert ist, so dass ein Sinussignal für eine vorbestimmte Zeitdauer, die dem Rechtecksignal entspricht, abgegeben wird. Das zugehörige Stromsignal kann entweder nach der Messung durch die Rotorwicklungen aufgenommen werden, oder kann auch grundsätzlich von der Erregerwicklung abgegriffen werden, da die Verbindung zwischen Erregerwicklung und Statorwicklungen die magnetische Kopplung und somit die anisotrope effektive magnetische Permeabilität wiedergibt. Bevorzugt wird jedoch ein Spannungspuls an die Statorwicklungen bzw. an die Statorwicklung abgegeben, wobei der sich daraufhin einstellende Stromverlauf an den Statorwicklungen oder an der Statorwicklung erfasst wird.

Vorzugsweise wird lediglich der Scheitelwert des Strompulses erfasst, das heißt das Maximum des Verlaufs. Dieser kann als Spitzenwert in einem Speicher hinterlegt werden oder in einer Berechnungseinheit eingegeben werden. Je nach Art der Erregung (Permanentmagnet oder Erregerwicklung) werden die jeweils zwei kleinsten oder größten dieser Spitzenwerte ermittelt, und der sich ergebende Winkelsektor bzw. die sich ergebende Winkelspanne wird durch eine dazwischen liegende Winkelrichtung erneut unterteilt. Entlang dieses Zwischenwinkels wird nun eine weitere Messung durchgeführt.

Die Erfindung beruht auf einem iterativen Vorgehen, wobei der zu erfassende Winkel durch wiederholte Teilung eines Winkelsektors angenähert wird, wobei zwischen zwei Winkelsektoren ausgewählt wird, welche die beiden maximalen oder minimalen (das heißt extremen) Spitzenwerte ausweisen. In einer ersten Iterationsstufe, im Allgemeinen (m)-Iterationsstufe genannt, wird ein (m)-Magnetfeld einer (m)-Winkelrichtung erzeugt und der zugehörige (m)-Spitzenwert wird erfasst. In dieser (m)-Iterationsstufe werden auch ein oder zwei weitere Spitzenwerte vorgesehen, entweder durch Abrufen aus einem Speicher, in dem Messergebnisse vorheriger Messungen abgelegt sind, oder durch Messen entlang der ein oder zwei weiteren Winkelrichtungen. Die zwei weiteren Spitzenwerte zu den zwei weiteren Winkelrichtungen werden dann gemessen, wenn zuvor keine Messungen in den entsprechenden zwei weiteren Winkelrichtungen durchgeführt wurden, oder wenn die Messergebnisse veraltet sind. Um zu erfassen, wenn die Messungen veraltet sind, kann ein Spitzenwert zusammen mit einem Zeitindikator oder einem Reihenfolgenindikator abgelegt werden, der die Aktualität der Messergebnisse wiedergibt. In einer besonderen Ausführungsform werden in jeder Iterationsstufe drei Messungen ausgeführt und es werden keine Messergebnisse für den Gebrauch in darauf folgenden Iterationsstufen hinterlegt.

Innerhalb einer (ersten) (m)-Iterationsstufe wird somit ein Wert tatsächlich erfasst, der (m)-Spitzenwert, und es werden ein oder zwei weitere Spitzenwerte vorgesehen (entweder ebenso durch Messen oder durch Abruf eines Speichers), wobei die weiteren Spitzenwerte als (m+i)-Spitzenwerte bezeichnet werden. Die zugehörigen Winkelrichtungen werden als (m+i)-Winkelrichtungen bezeichnet. Alle Winkelrichtungen innerhalb einer Iterationsstufe unterscheiden sich. Gemäß einer Ausführungsform liegt die (m)-Winkelrichtung zwischen den (m+i)-Winkelrichtungen, so dass die (m)-Winkelrichtung einem Iterationsnäherungsschritt entspricht.

Nachdem in einer (m)-Iterationsstufe drei Spitzenwerte zu drei Winkelrichtungen vorliegen, werden zu Beginn einer darauf folgenden (n)-Iterationsstufe zunächst die zugehörigen Messergebnisse der vorherigen Stufe, die eine Spitzenwertgruppe bilden, verglichen und die beiden größten oder beiden kleinsten Spitzenwerte dieser Spitzenwertgruppe herangezogen, um den nächsten zu untersuchenden Winkelsektor zu ermitteln. Die beiden größten bzw. die beiden kleinsten Spitzenwerte der Spitzenwertgruppe werden als Spitzenwerte der (n+1)-Winkelrichtung und (n+2)-Winkelrichtung bezeichnet und bilden die Grundlage für den nächsten zu untersuchenden Winkelsektor, der wieder zu unterteilen ist. Anstatt einer darauf folgenden Unterteilung, die zu zwei weiteren Winkeluntersektoren führt, kann die zwischen den beiden größten bzw. kleinsten Spitzenwerten liegende (n)-Winkelrichtung als Endergebnis, das heißt als erfasste Winkellage ausgegeben werden. Falls die Sektoren noch zu breit sind und eine höhere Genauigkeit erwünscht ist, wird die Messung in der (n)-Winkelrichtung durchgeführt. Der (n)-Spitzenwert wird mit dem größten Spitzenwert der vorangegangenen Iterationsstufe verglichen, d.h. mit dem größeren der beiden (n+i)-Spitzenwerte. Der (n)-Spitzenwert und der größere der beiden (n+i)-Spitzenwerte bilden die Grundlage für den nächsten zu untersuchenden Winkelsektor.

Mit (m) werden Einheiten einer vorhergehenden Iterationsstufe beschrieben, wobei mit (n) Einheiten beschrieben werden, die das Ergebnis einer Selektion sind, die auf der (m)-Iterationsstufe fußt und die zu Beginn einer (n)-Iterationsstufe verglichen und ausgewählt werden. Während jeder Iterationsstufe werden mehrere Magnetfelder, Winkelrichtungen und Spitzenwerte festgelegt, abgerufen bzw. gemessen, wobei mit "(m)" oder "(n)" ein Feld, eine Richtung oder ein Wert bezeichnet wird, der neu erfasst wird. Mit den Zusätzen "+i", "+1" und "+2" werden weitere Spitzenwerte bzw. Winkelrichtungen bezeichnet, die bereits in einem vorhergehenden Schritt gemessen wurden und somit entweder nochmals gemessen werden oder von der vorherigen Stufe übernommen werden können. Der neue Messwert, der dem Zwischenwinkel entspricht, wird somit mit (m) oder mit (n), d.h. ohne Zusatz wie +1 oder +n, bezeichnet.

Vorzugsweise wird zu Beginn des Verfahrens eine Start-Iterationsstufe vorgesehen, in der zunächst der Rotor im Stillstand vorgesehen wird, beispielsweise durch Abbremsen. Der Rotor wird vorzugsweise während des gesamten Verfahrens im Stillstand gehalten.

Zu Beginn werden drei Start-Magnetfelder in verschiedenen Start-Winkelrichtungen erzeugt, und die zugehörigen Start-Spitzenwerte werden erfasst. Wie bereits bemerkt entspricht ein Start-Spitzenwert dem Maximum eines Start-Strompulses, der durch einen vorgegebenen Start-Spannungspuls erzeugt wurde. Somit werden die Messungen in allen Winkelrichtungen, unabhängig von der Zugehörigkeit zu einer Iterationsstufe oder zu einer Start-Iterationsstufe alle in gleicher Weise ausgeführt. Während der Start-Iterationsstufe werden vorzugsweise die jeweiligen Winkel über einen Gesamtwinkel gleich verteilt, wobei der Gesamtwinkel (360° / p) entspricht, und p die Anzahl der magnetischen Pole des Rotors ist. p ist beispielsweise 2, wenn der Rotor nur einen Südpol und einen zugehörigen Nordpol aufweist. Auf Grund der 180°-Uneindeutigkeit wird somit nur die Hälfte eines Gesamtumlaufs (= 360°) bei einer Maschine mit einem Polpaar überdeckt. Auch hier werden je nach Art der Motorerregung die größten oder kleinsten Spitzenwerte erfasst; die kleinsten Spitzenwerte bzw. der kleinste Spitzenwert werden bzw. wird bei permanent erregten elektrischen Motoren verwendet, und die beiden größten Spitzenwerte werden vorzugsweise bei mittels Erregerspule erregtem Motor verwendet. Jedoch ist diese Zuordnung nicht notwendig, vielmehr kann diese Zuordnung auch umgekehrt werden, wenn ein 180°-Versatz berücksichtigt wird.

In jeder Iterationsstufe (bis auf die Start-Iterationsstufe) werden die beiden Winkelrichtungen ermittelt, die dem größten bzw. kleinsten Spitzenwert entsprechen, und der sich ergebenden Winkelsektor bzw. die sich ergebende Winkelspanne wird in zwei Teile geteilt. Die beiden Winkelunterteilungen können zwei gleich großen Winkelintervallen entsprechen, beispielsweise im Fall einer arithmetischen Kombination der beiden Winkelrichtungen, um einen Zwischenwinkel zu erfassen. Grundsätzlich muss jedoch der Zwischenwinkel, der die Winkelspanne aufteilt nicht in der Mitte liegen, sondern kann abhängig von dem einer Winkelrichtung zugehörigem Spitzenwert gewichtet werden. Werden beispielsweise die beiden größten Spitzenwerte ermittelt, und die beiden Spitzenwerte unterscheiden sich, so kann die nächste Winkelrichtung, welche die Winkelspanne unterteilt, umso näher an der Winkelrichtung mit dem größten Spitzenwert liegen, je mehr sich die Spitzenwerte unterscheiden. Die Gewichtung und die Kombination kann erfolgen durch: Multiplikation eines Werts, der dem zugehörigen Spitzenwert wiedergibt, mit der zugehörigen Winkelorientierung bzw. Winkelrichtung, Addieren der gewichteten Winkelrichtungen, die den größten (bzw. kleinsten) Spitzenwerten entsprechen und gegebenenfalls Normieren der sich ergebenden Winkelrichtung. Wenn die größten Spitzenwerte gesucht werden, dann ist der Gewichtungsfaktor umso größer, je mehr der Spitzenwert der zugehörigen Winkelrichtung über dem arithmetischen Mittel der beiden Spitzenwerte der beiden größten Winkelrichtungen liegt. Es können direkt proportionale oder lineare Abhängigkeiten zwischen Gewichtungsfaktor und Überschuss des Spannungsimpulses über das Mittel der Spannungsimpulse verwendet werden. Werden die beiden kleinsten Spitzenwerte gesucht, so ist der Gewichtungsfaktor der Winkelrichtung umso größer, je mehr der Spitzenwert der Winkelrichtung unter dem Mittel der beiden Spitzenwerte liegt. Auch hier können proportionale (mit dem Faktor -c, c konstant und positiv) oder lineare (fallende) Abhängigkeiten verwendet werden, um aus dem Spitzenwert den Gewichtungsfaktor zu ermitteln.

Anstatt der Vermessung nur einer neuen Winkelrichtung pro Iterationsstufe können grundsätzlich auch mehrere Winkelrichtungen pro Iterationsstufe durch Abgeben eines Spannungspulses auf die Rotorwicklungen vermessen werden. Insbesondere kann pro Winkelrichtung nur ein Spannungspuls verwendet werden, dessen Stromantwort verwendet wird. Alternativ werden jedoch pro Winkelrichtung zwei Magnetfelder erzeugt, die um + 45° bzw. - 45° von der tatsächlichen Winkelrichtung entfernt sind, wobei nun als Bemessungsfaktor nicht das Maximum des jeweiligen Spannungspulses selbst sondern die jeweiligen Maxima der Spannungspulse als Spitzenpaarwert vorgesehen werden, deren Differenz als Entscheidungsgrundlage zur Auswahl der Winkelsektorhälfte dient. Ansonsten gleicht das Verfahren dem oben beschriebenen Verfahren, wobei in dem oben beschriebenen Verfahren die Spitzenwerte, das heißt die Maxima der jeweiligen Spannungspulse als Bemessungsgrundlage dienen, an deren Stelle in der alternativen Ausführungsform die Differenz zweier Spitzenwerte tritt, die sich in Winkelrichtungen +/- 45° versetzt zu der zu erfassenden Winkelrichtung ergeben. Anstatt nun daher die beiden größten bzw. die beiden kleinsten Spitzenwerte zu ermitteln, um die korrekte Winkelsektorhälfte auszuwählen, werden gemäß der alternativen Ausführungsform die beiden Winkelrichtungen ausgewählt, deren Differenz der jeweils zugehörigen +/- 45°-Spitzenwerte größer ist (bei Motoren mit Erregerwicklung) bzw. deren Differenz den beiden kleinsten Differenzen entspricht (bei permanent erregten Motoren).

Ferner kann anstatt des Spitzenwerts eines Strompulses auch dessen maximale zeitliche Ableitung als Spitzenwert vorgesehen werden. Anstatt eines Abstands von 45° können jedoch auch beliebige Abstände zu der eigentlich zu erfassenden Winkelrichtung verwendet werden, wobei die Winkeldifferenzen in ihrem Betrag gleich sind. Vorzugsweise entspricht die Winkeldifferenz zwischen der eigentlich zu erfassenden Winkelrichtung der Winkelrichtung, an der die Messung ausgeführt wird einem Viertel des Gesamtwinkels, das heißt einem Viertel von 360°/p, wobei p die Anzahl der magnetischen Pole des Rotors ist. Umfasst der Rotor daher einen Nord- und einen Südpol (p = 2), ergibt sich somit eine Winkeldifferenz von +/- 45° zur eigentlich zu erfassenden Winkelrichtung.

Grundlage für diese alternative Form, in der anstatt entlang der zu erfassenden Winkelrichtung ein Doppelpuls in zwei von der zu erfassenden Winkelrichtung gleichermaßen beabstandeten Winkelrichtungen abgegeben wird, bildet die folgende Überlegung. Je geringer der Abstand der zu erfassenden Winkelrichtung vom absoluten Minimum bzw. vom absoluten Maximum ist, desto kleiner wird die Änderung der Induktivität mit dem Winkel dL/dϕ. Im schlechtesten Fall gilt dL/dϕ = 0, sodass die Grundlage zur Entscheidung zwischen zwei Winkelsektorhälften im Wesentlichen durch Ungenauigkeiten bestimmt wird. Dadurch wird die Empfindlichkeit des Verfahrens in der Nähe des gesuchten Punktes sehr schlecht, wenn der gesuchte Punkt einer Winkelrichtung entspricht, die dem Minimum oder dem Maximum (abhängig vom Motortyp) nur geringfügig entfernt ist. Auch größere Winkelunterschiede führen an diesem Punkt zu einer geringen Differenz der Stromanstiege.

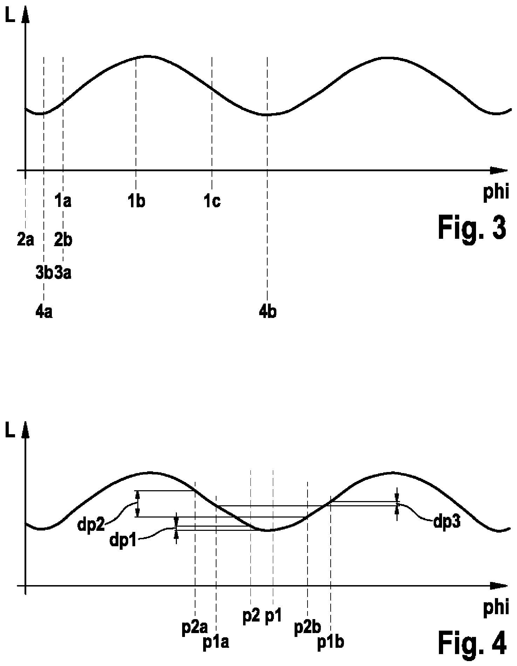

Die Induktivität L (ϕ) ist bei Maschinen in gängiger Bauweise symmetrisch zum gesuchten Extrem, das heißt symmetrisch zu der Winkelrichtung, die dem absoluten Minimum bzw. dem absoluten Maximum der Spitzenwerte entspricht. Gemäß der alternativen Variante, in der pro Winkelrichtung ein Doppelpuls (vorzugsweise zeitlich versetzt) beabstandet zu der zu erfassenden Winkelrichtung abgegeben wird, werden beispielsweise zwei Winkelrichtungen ϕ1 und ϕ2 (die jeweils eine zu erfassende Winkelrichtung darstellen) wie folgt erfasst und miteinander verglichen. Die Einzelpulsvariante kann mit der Doppelpulsvariante kombiniert werden, beispielsweise innerhalb ein und desselben Erfassungsprozesses, wobei die Varianten gemäß der Winkelrichtung des aktuellen (vorläufigen) Extrems der Spitzenwerte ausgewählt werden, um bei jedem Messschritt die maximale Genauigkeit zu erreichen. Anstatt jeweils ein einzelner Puls in Richtung der zu erfassenden Winkelrichtung abzugeben, und die entsprechenden Stromanstiege, bzw. deren Spitzenwerte zu vergleichen, werden gemäß Doppelpulsvariante nun Spannungspulse bei den Winkeln ϕ1 + 45°, ϕ1 - 45°, ϕ2 + 45°, ϕ2 -45° von der Statorwicklung ausgegeben (dies entspricht zwei Doppelpulsen). Liegen ϕ1 und ϕ2 in der Nähe des gesuchten (absoluten) Extrempunkts, so werden nun Spannungspulse in den Richtungen mit der größten Steigung dL/dϕ ausgegeben. Durch das Versetzen der Winkelrichtung von der eigentlich zu erfassenden Winkelrichtung wird somit die Messung vom "Totpunkt" zu dem Punkt mit der größten Steigung und somit zu dem Punkt mit der größten Differenz verlagert. Auf Grund der Symmetrie der Induktivität L(ϕ) zum gesuchten Extrempunkt gilt: je näher der Winkel ϕ am gesuchten Extrempunkt liegt, desto kleiner wird die Differenz zwischen dem Stromanstieg bzw. dem Spitzenwert bei ϕ +45° und ϕ - 45°. Liegt ϕ im Extrempunkt, so sind beide Stromanstiege gleich, die Differenz ist null. Eine nähere Erläuterung dieser Vorgehensweise findet sich in Abbildung 4. Gesucht wird bei dieser Variante daher der Winkel ϕ, bei dem die Differenz der Stromanstiege bzw. die Differenz der Spitzenwerte bei ϕ + 45° und ϕ - 45° minimal wird. Verglichen werden somit die Differenzen zwischen den zwei Messungen der Doppelpulse, wobei die Differenz grundsätzlich an die Stelle des Spitzenwerts als Maß zur Winkelerfassung treten kann. Je nach bereits in einem vorherigen Iterationsschritt erfassten Winkelsektor kann sich daher anbieten, entweder das auf die Spitzenwerte abzielende Verfahren zu verwenden, oder die Doppelpulsvariante zu verwenden. Innerhalb eines Messvorgangs kann gemäß (vorläufigem) ausgewählten Winkelsektor entweder der Spitzenwert entlang der zu erfassenden Winkelrichtung als Grundlage herangezogen werden, oder es können zwei Messungen entlang zweier gleichmäßig von der zu erfassenden Winkelrichtung entfernten Messrichtung vorgenommen, wobei dann die Differenz des Messpaars als Unterscheidungsmaß für die tatsächlich zu erfassende Winkelrichtung herangezogen wird.

Die Erfindung eignet sich insbesondere für Antriebsmotoren in Elektrofahrzeugen oder Hybridfahrzeugen, beispielsweise Synchronmotoren mit permanenterregtem oder mittels Erregerspule erregtem Rotor. Grundsätzlich ist die Erfindung jedoch auch für andere Anwendungsgebiete geeignet, in denen vorzugsweise Synchronmotoren zum Einsatz kommen und aus dem Ruhezustand heraus mit maximalem Drehmoment oder gemäß einem vorgegebenen Drehzahlverlauf, der eine genaue absolute Winkelerfassung während des Stillstands des Motors erfordert, angefahren werden.

Der Spannungspuls kann gemäß einem beliebigen Verlauf abgegeben werden, vorzugsweise in Form eines Spannungsverlaufs, der unabhängig von der Auswahl oder Gruppierung von angeschlossenen Statorwicklungen(also unabhängig von seiner Richtung) den gleichen Betrag aufweist. Der zugehörige erfasste Strompuls kann ferner gegenüber dem eingegebenen Spannungspuls normiert werden. Der Strom kann erfasst werden mittels eines Shunt-Widerstands oder mittels eines Hallsensors, der an einer Zuleitung angeordnet ist. Ferner kann die Auswirkung des Spannungspulses auf den Rotor durch Spannungs- oder Stromerfassung an einer Erregerwicklung des Rotors gemessen werden.

Um die 180°-Zweideutigkeit aufzulösen wird vorzugsweise ein Schritt der Absolutorientierung ausgeführt, bei dem entlang um 180° entgegengesetzten Winkelrichtungen gemessen wird oder, bei einem Rotor mit mehr als zwei Polen, in Richtungen, die einem vielfachen von 360°/p entsprechen, wobei p die Anzahl der magnetischen Pole des Rotors ist. Hierbei werden Orientierungs-Spitzenwerte des Strompulses erfasst, der durch die Orientierungsmagnetfelder erzeugt wurde und es wird der kleinste bzw. der größte Orientierungsspitzenwert und die zugehörige Winkelrichtung der beiden oder aller Orientierungs-Spitzenwerte erfasst. Die zugehörige Winkelrichtung liegt in einem Absolutorientierungswinkelsektor, der sich durch Aufteilen eines gesamten Umfangs in p Winkelsektoren ergibt. Bei einem Rotor mit einem Nord- und einem Südpol kann somit durch Vergleich zwischen zwei verschiedenen, um 180° versetzten Winkelrichtungen bzw. deren Spitzenwerte die Hemisphäre (d.h. Halbwinkelumfang) erkannt werden, in der der Rotor ausgerichtet ist. Bei Rotoren mit Erregerwicklung entspricht der größere der beiden Spitzenwerte der Hemisphäre, in die der magnetische Nordpol zeigt. Während des Schritts der Absolutorientierung wird vorzugsweise der Rotor erregt, wobei dies im Fall von mittels Erregerspule erregten Motoren durch Bestromung der Erregerwicklung vorgesehen wird.

Die Erfindung wird somit durch ein erfindungsgemäßes Verfahren oder durch eine Vorrichtung umgesetzt, die einen Winkelsektor, der durch zwei Winkelrichtungen abgegrenzt ist, unterteilt, wobei die Vorrichtung eingerichtet ist, entlang dieser Winkelrichtung (und entlang anderer Winkelrichtungen) den Spitzenwert (oder Differenz bei der Doppelpulsvariante) zu ermitteln, die jeweiligen Werte zu vergleichen, die zwei größten bzw. die zwei kleinsten Werte aus den Werten durch Vergleich zu ermitteln, und eine Winkelrichtung vorzusehen, die zwischen den beiden Winkelrichtungen der beiden größten bzw. kleinsten Spitzenwerte liegt. Um eine Winkelrichtung vorzusehen, die zwischen zwei Winkelrichtungen liegt, umfasst die Vorrichtung vorzugsweise eine Mittelungseinrichtung, die gegebenenfalls mit einer Gewichtungsvorrichtung gekoppelt sein kann, die die Winkelangaben mit dem zugehörigen Spitzenwert oder mit einer Konstanten minus Spitzenwert gewichtet. Die Vorrichtung umfasst ferner Vergleichsvorrichtungen, die Strompulse vergleicht, vorzugsweise Maximalwerte bzw. Spitzenwerte von Strompulsen. Ferner umfasst die Vorrichtung vorzugsweise eine Ansteuerungsvorrichtung, um einen Spannungspuls an die Statorwicklungen abzugeben. Die Vorrichtung kann ferner einen Speicher umfassen, der die beiden größten bzw. kleinsten Spitzenwerte (oder Differenzen bei der Doppelpulsvariante) zusammen mit den zugehörigen Winkelrichtungsangaben speichert, oder der nur die Winkelrichtungen der größten Spitzenwerte speichert. Um die Doppelpulsvariante auszuführen umfasst die Vorrichtung vorzugsweise eine Additionsvorrichtung, um aus der eigentlich zu erfassenden Winkelrichtung die beiden dazu beabstandeten Winkelrichtungen auszugeben, wobei die Additionsvorrichtung zwei vom Betrag her gleiche und vom Vorzeichen verschiedene Beträge zu der eigentlichen zu erfassenden Winkelrichtung addiert. Ferner umfasst die Vorrichtung zur Ausführung der Doppelpulsvariante vorzugsweise einen Subtrahierer, der die Differenz zwischen zwei Spitzenwerten errechnet und zur Auswertung an einen daran angeschlossenen Vergleicher weitergibt.

Die Vorrichtung umfasst ferner vorzugsweise eine Startvorrichtung mit einem Startwinkel, der eine erste Näherung der zu erfassenden Winkelrichtung ist. Die Startvorrichtung kann mit einem Grob-Sensor oder einer Winkelrichtungsquelle verbunden sein, die die Winkelrichtung mit einer geringen Genauigkeit ausgibt.

Erfindungsgemäß wird eine winkelabhängige Induktivität durch Einprägen eines Spannungspulses und Auswertung des resultierenden Strompulses erfasst. Alternativ könnte auch ein Strompuls eingeprägt werden, und der resultierenden Spannungspuls könnte zur Erfassung der winkelabhängigen Induktivität ausgewertet werden. Die eingeprägten Strompulse/Spannungspulse sind vorzugsweise für sich genommen Einzelpulse mit vordefiniertem Verlauf, jedoch könnten auch anstatt eines Pulses eine vordefinierte Pulsfolge eingeprägt werden.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1a: ein Winkelschaubild zur Erläuterung der Initialisierung des erfindungsgemäßen Verfahrens;
- Figur 1b: ein zugehöriges Spannungs- und Stromverlaufsbild;
- Figur 2a, 2b und 2c: eine Winkeldarstellung der iterativen Winkelerfassung gemäß der Erfindung;
- Figur 3: eine Winkelerfassung gemäß dem iterativen Winkelerfassungsverfahren gemäß der Erfindung in Koordinatensystemdarstellung; und
- Figur 4: eine Winkeldarstellung einer erfindungsgemäßen Winkelerfassung gemäß einer Doppelpuls-Ausführungsform in Koordinatensystemdarstellung.

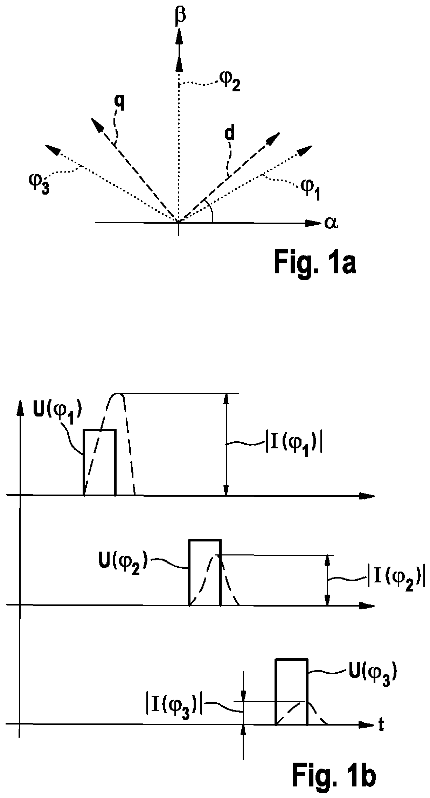

Die Figur 1a zeigt die Initialisierung des erfindungsgemäßen Verfahrens anhand einem Kreisdiagramm, das auf einem Rotor mit einem Nord- und einem Südpol basiert. Entlang der mit d gekennzeichneten Achse verläuft die Hauptmagnetisierungsrichtung und somit die Feldlinien des von einer Erregerspule erzeugten magnetischen Feldes. Die q-Achse verläuft senkrecht hierzu und entspricht der Querachse, die senkrecht zu der Längsachse d ist, wobei die q-Achse senkrecht zu den Feldlinien des Erregermagnetfelds verläuft. Anfänglich werden drei um jeweils 60° zueinander versetzte Winkelrichtungen gemäß dem aktiven Abtastungsverfahren abgetastet, das heißt indem in die Richtung ϕ1, ϕ2 und ϕ3 jeweils ein Spannungsimpuls abgegeben wird. Mit anderen Worten werden drei verschiedene Spannungsimpulse an den Stator abgegeben, der hierdurch drei verschiedene Magnetfelder in Richtungen ϕ1, ϕ2 und ϕ3 erzeugt. Die zugehörigen Stromverläufe werden erfasst.

Die Figur 1b zeigt mit U (ϕ1) den Spannungspuls, der zu einem ersten Zeitpunkt an den Rotor abgegeben wurde, mit U (ϕ2) einen zweiten Spannungspuls, der an den Rotor abgegeben wurde, und mit U (ϕ3) einen Spannungspuls, der nach den beiden ersten Spannungspulsen an den Rotor abgegeben wurde. Vorzugsweise wird immer nur ein Spannungspuls an den Stator abgegeben, wobei zwischen zwei Spannungspulsen vorzugsweise eine Mindestzeitdauer liegt. Spannungspulse, die zu verschiedenen Winkelrichtungen gehören, überlappen sich vorzugsweise nicht, sondern sind um ein Mindestzeitintervall voneinander entfernt. Die durch die Spannungspulse erzeugten Ströme sind gestrichelt dargestellt. Es ist zu erkennen, dass der Strom versetzt zu der Spannung ansteigt und erst nach der abfallenden Flanke der Spannung abfällt. Durch den Phasenversatz zwischen Strom und Spannung lässt sich auf die jeweilige Induktivität in dieser Richtung schließen. Erfasst wird das Maximum des Stromverlaufs als Betrag, das heißt Betrag von I (ϕ1), Betrag von I (ϕ2), Betrag von I (ϕ3). Es ist zu erkennen, dass der größten Spitzenwert des erzeugten Strompulses bei ϕ1 liegt, der nächst kleinere bei ϕ2 liegt und der kleinste Strompuls bei ϕ3 liegt. Erfindungsgemäß werden die Spitzenwerte miteinander verglichen, und die beiden größten Spitzenwerte bzw. deren Winkelrichtungen werden an die nächste Iterationsstufe weitergegeben. Aus dem in Figur 1b dargestellten Diagramm folgt, dass die tatsächliche Winkelrichtung des Rotors näher bei ϕ1 als bei ϕ2 liegt (der Spitzenwert von ϕ2 ist kleiner als der Spitzenwert von ϕ1), wobei in der Richtung ϕ3 der kleinste Spitzenwert erfasst wurde. Daraus kann gefolgert werden, dass in der Richtung ϕ3 am weitesten von der tatsächlich zu erfassenden Winkelrichtung entfernt ist. Ferner kann gefolgert werden, dass das absolute Maximum aller Spitzenwerte zwischen ϕ1 und ϕ2 liegt. Die in Figuren 1a und 1b dargestellte Vorgehensweise umfasst noch eine 180°-Uneindeutigkeit, die vor oder nach dem Initialisierungsverfahren oder nach dem iterativen Verfahren aufgelöst werden kann. Ferner kann das in den Figuren 1a und 1b dargestellte Initialisierungsverfahren kombiniert werden mit der Auflösung der 180°-Uneindeutigkeit, indem eine vierte Winkelrichtung untersucht wird, die entgegengesetzt zu ϕ1 liegt. Damit ist ein Halbraum von 180° vollständig abgedeckt und beispielsweise durch den Vergleich von ϕ1 zu der Winkelrichtung, die ϕ1 entgegengesetzt ist, kann die Nord-Südausrichtung des Rotors ermittelt werden. Somit wird die Erfassung in Richtung ϕ1 doppelt verwendet, zum einen zum Initialisieren (das heißt zur Ermittlung einer grundlegenden Ausrichtung des Rotors), und zum anderen zur Auflösung der 180°-Uneindeutigkeit, indem eine Messung in Richtung ϕ1 und eine Messung in Richtung 180° minus ϕ1 ausgeführt wird.

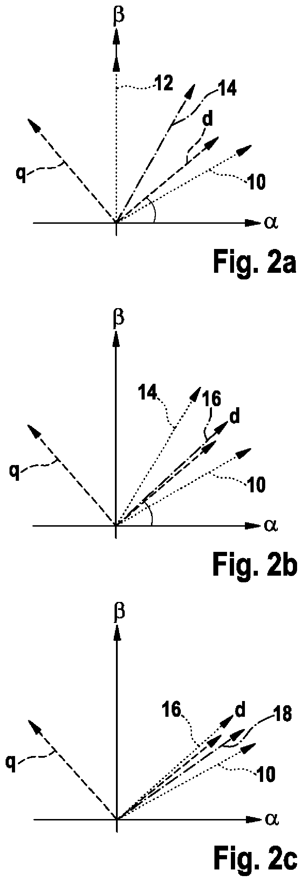

In den Figuren 2a-2c ist der Verlauf des erfindungsgemäßen Winkelerfassungsverfahren dargestellt. Mit q und d sind die Hauptachsen des Rotors bezeichnet. Zunächst werden zwei Winkelrichtungen vorgegeben, 10 und 12. Das in Figur 2a dargestellte Winkeldiagramm entspricht dem in Figur 1a dargestellten Winkeldiagramm, so dass der in Figur 2a dargestellte Schritt dem Schritt entspricht, der auf den Initialisierungsschritt folgt. Die Richtungen 10 und 12 entsprechen somit ϕ1 bzw. ϕ2. Aus der Figur 2b ist der Grund ersichtlich, warum aus dem in Figur 1 dargestellten Initialisierungsschritt die Winkelrichtungen ϕ1 und ϕ2 übernommen wurden: Die Spitzenwerten von ϕ1 und ϕ2 waren die beiden größten Werte aller gemessenen Spitzenwerte. Es ist aus Figur 1a zu erkennen, dass die gesuchte Winkelrichtung der Hauptachse des Rotors, die mit d gekennzeichnet ist, nahe bei ϕ1 liegt. Aus diesem Grund ergab sich bei ϕ1 gemäß der Figur 1b der größte Spitzenwert i (ϕ1). In Figur 2a wird dargestellt, dass eine zwischen 10 und 12 (=ϕ1 und ϕ2) gelegene Winkelrichtung ausgewählt wird, in diesem Fall durch Mittelung. Die neue Winkelrichtung 14 entspricht einer Zwischenwinkelrichtung, die sich beispielsweise durch arithmetisches Mitteln der Richtungen 10 und 12 ergibt.

In Figur 2b ist der darauf folgende Iterationsschritt dargestellt, demgemäß aus dem vorherigen Schritt die beiden Winkelrichtungen der beiden größten Spitzenwerte, 14 und 10, übernommen werden. Dies entspricht dem Schritt des Vorsehens von mindestens zwei Spitzenwerten. Die Messung entlang der Richtung 16 dient zur Vervollständigung des Iterationsschritts und ermöglicht einen Vergleich der beiden Sektoren, die zwischen 14 und 16 bzw. 16 und 10 liegen. Als Beginn der darauf folgenden Iterationsstufe kann das Ermitteln der beiden Winkelrichtungen vorgesehen werden, in denen die beiden größten Spitzenwerte aus einer Spitzenwertgruppe ausgewählt werden, wobei die Spitzenwertgruppe die Spitzenwerte der Winkelrichtungen 10, 16 und 14 enthält.

In Figur 2c wird darauf folgend, jedoch noch innerhalb der nächsten Iterationsstufe, ein Zwischenwinkel zwischen den Winkellagen 10 und 16 ermittelt, wobei die Winkelrichtungen 10 und 16 bereits in einem vorherigen Schritt der gleichen Iterationsstufe als die beiden Winkelrichtungen mit den größten Spitzenwerten ermittelt wurden. Als Winkelrichtung zwischen der Winkelrichtung 10 und der Winkelrichtung 16 wird die Winkelrichtung 18 vorgesehen, die exakt in der Mitte zwischen der Winkelrichtung 10 und 16 liegt. Die Mitte zwischen zwei Winkeln wird beispielsweise durch arithmetische Mittelung vorgesehen. Es ist aus den Figuren 2a-2c zu erkennen, dass die jeweils neu hinzutretenden Winkelrichtungen, das heißt 14, dann 16 und dann 18 sich mehr und mehr der tatsächlichen Winkelrichtung der Hauptachse des Rotors annähern. Die Winkelrichtung 18 kann entweder ausgegeben werden oder wird für eine weiter Iterationsstufe als Grundlage verwendet, zusammen mit der Winkelrichtung 16, da diese, neben der Winkelrichtung 18 den größeren Spitzenwert aufweist. Die Vergleichsschritte können vereinfacht werden, indem nicht die beiden größten sondern der kleinste Spitzenwert und dessen Winkelrichtung ermittelt wird. Der kleinste Spitzenwert und dessen Winkelrichtung wird dann aussortiert. Bei permanent erregten Elektromotoren werden in gleicher Weise entweder die beiden kleinsten Spitzenwerte und deren Winkelrichtung ermittelt und weitergegeben, oder es wird der größte Spitzenwert ermittelt bzw. dessen Winkelrichtung, der daraufhin aussortiert wird. Dieses Verfahren eignet sich insbesondere wenn in jeder Iterationsstufe insgesamt drei Winkelrichtungen untersucht werden, wovon eine aussortiert wird und die verbleibenden zwei an die nächste Iterationsstufe weitergegeben wird.

Wenn die Figur 2b als (m)-Iterationsstufe aufgefasst wird, und die Figur 2c als (n)-Iterationsstufe aufgefasst wird, dann entspricht die (m)-Winkelrichtung der Richtung 16, da in dieser ein Magnetfeld angelegt wird. Der zugehörige (m)-Spitzenwert entspricht dem zugehörigen (m)-Spannungspuls. Als (m+i)-Spitzenwerte und die zugehörigen (m+i)-Winkelrichtungen können die Winkelrichtungen 10 und 14 betrachtet werden, da diese lediglich vorgesehen werden, das heißt beispielsweise durch Übertrag von einer vorherigen Iterationsstufe oder von einer vorherigen Start-Iterationsstufe. Die darauf folgende (n)-Iterationsstufe ist in Figur 2c dargestellt, wobei die (n+1)-Winkelrichtung und die (n+2)-Winkelrichtung mit 10 und 16 dargestellt werden, da diese bereits vorhanden sind. Als (n)-Winkelrichtung wird der Zwischenwinkel 18 vorgesehen, der in der (n)-Iterationsstufe als neuer Iterationswert erzeugt wird.

In der Figur 3 ist die Abhängigkeit der Induktivität von dem Winkel ϕ dargestellt. Diese ist nicht notwendigerweise sinusförmig, sondern hängt insbesondere von der Geometrie und der Materialeigenschaft des Rotors ab. Zunächst werden zwei Initialisierungspulse 1a, 1b, 1c mit gleichem Abstand abgegeben, wobei diese durch ihre breite Fächerung einen Winkel von bereits 120° abdecken. In Figur 3 ist der Initialisierungspuls 1a bei 30°, der Initialisierungspuls 1b bei 90° und der Initialisierungspuls 1c bei 150° angeordnet. Da in Figur 3 nach dem Minimum gesucht wird, wird eine Einzelpulssequenz aus den Pulsen 2a und 2b abgegeben. Dies ist beispielsweise die Folge einer Minimumsuche, die ergeben hat, dass die Initialisierungspulse mit den Richtungen 1a und 1c die beiden kleinsten Spitzenwerte aufwiesen. Der Spannungspuls bei 2a entspricht somit einer Winkellage zwischen 1a und 1c. Darauf folgend wird eine Einzelpulssequenz bei 3a und 3b abgeben, wobei die weiteren Auswertungsschritte nicht näher betrachtet werden. 3a und 3b entsprechen den Richtungen 30° und 15°, wohingegen die Spannungspulse 2a und 2b in die Richtungen 0° und 30° abgegeben wurden. Es ist zu erkennen, dass die Winkelrichtung 1a, 2b und 3a weiter verwendet wird, beispielsweise durch erneutes Aussenden eines Pulses in dieser Richtung oder durch Speichern des dazugehörigen Spitzenwerts. Schließlich werden die Spannungspulse 4a und 4b in die Winkelrichtungen 15° und 195° abgegeben. Diese dienen der Absolutwinkelorientierung.

In der Figur 4 ist eine Winkelerfassung gemäß der Doppelpulsvariante wiedergegeben. Die Winkel p1 und p2 liegen bereits in der Nähe des gesuchten Minimums, wodurch es schwierig wird, durch den Vergleich der (sich nun sehr ähnlichen) Spitzenwerte die richtige Entscheidung für die Auswahl der beiden größten oder kleinsten Spitzenwerte zu treffen. Der Induktivitätsunterschied dp1 zwischen p1 und p2 ist klein, wodurch eine Unterscheidung mit Fehler behaftet sein kann. Daher wird zur näheren Untersuchung der Winkelrichtung p1 ein Pulspaar in die Richtungen p1a und p1b ausgesendet, wobei p1a und p1b +/- 45° von p1 entfernt sind. p1a und p1b dienen zur näheren Auswertung des Punkts p1. Um den Punkt p2 auszuwerten, wird an den Winkelrichtungen p2a und p2b gemessen, die ebenso um +/- 45° von p2 entfernt sind. Der Abstand von +/- 45° gewährleistet, dass an diesen Stellen ein Unterscheidungsmaximum vorliegt, wohingegen an den Stammpunkten p1 und p2 ein Unterscheidungsminimum vorliegt. Unterscheidungsmaximum und Unterscheidungsminimum betreffen die Qualität der Unterscheidung der Spitzenwerte. Um die Punkte p1 und p2 nun auszuwerten wird zur Auswertung der Richtung p1 die Differenz der Spitzenwerte zwischen p1a und p1b gebildet, die Differenz hinsichtlich der Induktivität wird als dp3 bezeichnet. Um in gleicher Weise p2 auszuwerten, wird die Differenz der Spitzenwerte zwischen p2a und p2b ausgewertet, wobei dp2 die Differenz hinsichtlich der Induktivität angibt. Es ist klar zu erkennen, dass die Differenz dp3 sich stark von der Differenz dp2 unterscheiden lässt. Somit ergibt sich durch vergleichende Differenzen ein besseres Unterscheidungsmerkmal, da die Werte deutlich unterschieden sind und auch bei verrauschten Signalen die Unterscheidung sicher vorgesehen werden kann. Im Vergleich hierzu ist der tatsächliche Induktivitätsunterschied zwischen p2 und p1 als dp1 dargestellt, wobei dieser graphisch in Beziehung gesetzt werden kann zu den Differenzen dp2 und dp3. Es ist gut zu erkennen, dass die Differenz dp1, die sich bei einer Einzelpulsmessung ergeben würde, zu deutlich schwieriger zu unterscheidenden Iterationen führt, sodass leichtes Rauschen in falschen Entscheidungen resultieren kann. Hingegen lassen sich dp3 und dp2 gut unterscheiden, obwohl die Stammpunkte p1 und p2 nah beieinander liegen. Selbst wenn das Endergebnis stark verrauscht ist, lässt sich dp3 von dp2 gut unterscheiden, um zwischen diesen beiden Werten den größeren oder den kleineren auszuwählen. Hingegen lässt sich zwischen p1 und p2 selbst schlecht unterscheiden, welches von den beiden Punkten der niedrigeren Induktivität angehört, wenn von üblichen Messfehlern ausgegangen werden muss. Somit ist der Unterschied zwischen den Induktivitätsdifferenzen bzw. zwischen den zugehörigen Spitzenwertdifferenzen dp2 und dp3 relativ groß, im Vergleich zu der Unterscheidungsfähigkeit zwischen p1 und p2 bzw. den dazugehörigen Spitzenwerten. Die Figur 4 zeigt Messungen lediglich zu zwei Winkelrichtungen, das heißt zu p1 und p2. Jedoch kann das anhand Figur 4 dargestellte Verfahren auch mit einer einzelnen Winkelrichtung, oder mittels 3 oder mehr Winkelrichtungen ausgeführt werden, die jeweils mittels eines Doppelpulspaares erfasst werden. Als Doppelpulspaar werden Spannungspulse bezeichnet, die in zwei verschiedene Winkelrichtungen abgegeben werden, die jedoch beide von der gleichen, eigentlich zu erfassenden Winkelrichtung gleich weit beabstandet sind. Das Doppelpulspaar umfasst zwei Spannungspulse, die nacheinander ausgeführt werden, vorzugsweise mit einem Schutzintervall zwischen den beiden Spannungspulsen, um die zugehörigen Strompulse besser erfassen zu können. Wie bereits vermerkt werden Spannungspulse immer einzeln abgegeben und vorzugsweise nicht überlappend.

## Patentansprüche

1. Verfahren zur Bestimmung der Winkellage einer Synchronmaschine mit magnetisch anisotropen Rotor, mit:
- einer (m)-Iterationsstufe, welche umfasst:
- Erzeugen eines (m)-Magnetfelds einer (m)-Winkelrichtung mit einer sich zeitlich ändernden Stärke durch Anlegen eines (m)-Spannungspulses an die Sychronmaschine und Erfassen eines (m)-Spitzenwerts des durch den (m)-Spannungspuls erzeugten Strompuls; und
- Vorsehen von weiteren (m+i)-Spitzenwerten, welche durch Magnetfelder in unterschiedlichen (m+i)-Winkelrichtungen erzeugt werden, die sich von der (m)-Winkelrichtung unterscheiden;
- einer (n)-Iterationsstufe, die auf die (m)-Iterationsstufe folgt, und die umfasst:
- Ermitteln der Winkelrichtungen, in denen die beiden größten oder die beiden kleinsten Spitzenwerte aus einer Spitzenwertgruppe auftreten, als (n+1)-Winkelrichtung und (n+2)-Winkelrichtung, wobei die Spitzenwertgruppe den (m)-Spitzenwert sowie die weiteren (m+i)-Spitzenwerte umfasst; und
- Vorsehen einer (n)-Winkelrichtung, die zwischen der (n+1)-Winkelrichtung und der (n+2)-Winkelrichtung liegt, als Winkellage-Ausgabe oder, falls noch eine höhere Genauigkeit erwünscht ist, Vorsehen einer (n)-Winkelrichtung, die zwischen der (n+1)-Winkelrichtung und der (n+2)-Winkelrichtung liegt, als (n)-Winkelrichtung, in der ein (n)-Magnetfeld mit einer sich zeitlich ändernden Stärke durch Anlegen eines (n)-Spannungspulses an die Synchronmaschine erzeugt wird, um einen (n)-Spitzenwert des durch den (n)-Spannungspuls erzeugten Strompuls zu erfassen.

2. Verfahren nach Anspruch 1, mit einer Start-Iterationsstufe, die vor der (m)-Iterationsstufe ausgeführt wird, und die umfasst:
Vorsehen des Rotors im Stillstand;
Erzeugen von mindestens drei Start-Magnetfeldern in unterschiedlichen Start-Winkelrichtungen mit einer sich zeitlich ändernden Stärke durch Anlegen von Start-Spannungspulsen und Erfassen der zugehörigen Start-Spitzenwerte der durch die jeweiligen Start-Spannungspulsen erzeugten Start-Strompulsen; wobei benachbarte Start-Winkelrichtungen jeweils um den gleichen Distanzwinkel voneinander beabstandet sind; Ermitteln der beiden Start-Winkelrichtungen, in denen die beiden größten oder die beiden kleinsten Spitzenwerte aller Start-Spitzenwerte auftreten;
Vorsehen der (m)-Winkelrichtung als eine Winkelrichtung, die zwischen den beiden ermittelten Start-Winkelrichtungen liegt; und
Vorsehen der (m+i)-Winkelrichtungen als die beiden ermittelten Start-Winkelrichtungen.

3. Verfahren nach Anspruch 1, wobei das Erzeugen der Magnetfelder mit sich zeitlich ändernder Stärke umfasst: Anlegen eines vordefinierten Spannungspulses an eine Statorwicklung oder verteilt an mehrere Statorwicklungen und der vordefinierte Spannungspuls einen vordefinierten Verlauf aufweist.

4. Verfahren nach Anspruch 1, wobei das Vorsehen einer Winkelrichtung, die zwischen zwei Winkelrichtungen liegt, umfasst: Vorsehen der Winkelrichtung als Summe der zwei Winkelrichtungen geteilt durch zwei oder Vorsehen der Winkelrichtung als Summe der zwei Winkelrichtung, die gemäß eines jeweiligen Gewichtungsfaktor gewichtet werden, wobei der jeweilige Gewichtungsfaktor umso kleiner ist, je mehr der zugehörige Betrag des Spitzenwerts von dem kleinsten oder von dem größten Spitzenwert der Spitzenwertgruppe abweicht.

5. Verfahren nach Anspruch 1, wobei das Ermitteln der Winkelrichtungen, in denen die beiden größten oder die beiden kleinsten Spitzenwerte aus einer Spitzenwertgruppe auftreten, umfasst: Ermitteln der Winkelrichtungen, in denen die beiden kleinsten Spitzenwerte aus einer Spitzenwertgruppe auftreten, wenn die Synchronmaschine eine mittels Permanentmagnet erregte Synchronmaschine ist, und Ermitteln der Winkelrichtungen, in denen die beiden größten Spitzenwerte aus einer Spitzenwertgruppe auftreten, wenn die Synchronmaschine eine mittels Erregerwicklung erregte Synchronmaschine ist.

6. Verfahren nach Anspruch 1, wobei Erzeugen eines Magnetfelds einer Winkelrichtung und Erfassen eines Spitzenwerts umfasst: Erzeugen eines Magnetfelds, das entlang der Winkelrichtung verläuft durch geeignete Verteilung des Spannungspulses auf verschiedene Statorwicklungen, die jeweils Magnetfeldkomponenten erzeugen, die addiert entlang der Winkelrichtung verlaufen; und Erfassen des Stromes in einer Leitung, an die der Spannungspuls angelegt wird, mittels eines Shunt-Widerstands, mittels eines HallSensors oder einer indirekten Stromerfassungsvorrichtung, oder wobei Erzeugen eines Magnetfelds in einer Winkelrichtung und Erfassen eines Spitzenwerts umfasst nacheinander: Erzeugen von zwei Magnetfeldern, die um die gleiche Winkeldifferenz zu der Winkelrichtung zu beiden Seiten der Winkelrichtung versetzt sind, durch geeignete Verteilung der Spannungspulse auf verschiedene Statorwicklungen, wobei die Winkeldifferenz einem Viertel eines Gesamtwinkels von 360°/p entspricht, wobei p die Anzahl der magnetischen Pole des Rotors ist; und Erfassen die Differenz der Beträge der Stromspitzenwerte, wobei die Winkelrichtung der Mitte der Winkelrichtungen der beiden Magnetfelder entspricht.

7. Verfahren nach Anspruch 1, das ferner umfasst: einen Schritt der Absolutorientierung, wobei der Schritt umfasst: Vorsehen einer Läufererregung durch Vorsehen eines Permanentmagneten oder durch Bestromen einer Erregerwicklung, Erzeugen von Orientierungsmagnetfeldern mit einer sich zeitlich ändernden Stärke in allen Winkelrichtungen, 0° und 360°/p, wobei p die Anzahl der magnetischen Pole des Rotors ist; Erfassen der Orientierungs-Spitzenwerte des Strompuls, der durch die Orientierungsspannungspulse erzeugt wurde; und Ermitteln des kleinsten oder des größten Orientierungs-Spitzenwerts und der zugehörigen Winkelrichtung; und Winkel des Absolutorientierungwinkelsektors, in dem die zugehörige Winkelrichtung liegt.

8. Vorrichtung zur Durchführung des Verfahrens nach Anspruch 1, mit:
- einem oder mehreren Stromsensoren, einem Spannungspulsgenerator und einer daran angeschlossenen Ansteuervorrichtung, die einen Winkeleingang aufweist,
- wobei die Ansteuervorrichtung die von dem Spannungspulsgenerator erzeugte Spannung derart auf Ausgänge verteilt, die zum Anschließen des Synchronmotors eingerichtet sind, dass der anschließbare Synchronmotor ein Feld erzeugt, dessen Richtung einem an dem Winkeleingang anliegenden Winkelsignal entspricht;
- wobei die Stromsensoren an die Ausgänge angeschlossen sind, um die durch die Ausgänge fließenden Ströme zu erfassen;
- wobei die Vorrichtung ferner eine Vergleichsvorrichtung umfasst, die eingerichtet ist, die Strompulse, die durch Spannungspulse bei verschiedenen Winkelsignalen erzeugt wurden, zu vergleichen, um die beiden größten oder kleinsten aller Strompulse und die beiden zugehörigen Winkelsignale zu erfassen und die beiden zugehörigen Winkelsignale an einem Ausgang der Vergleichsvorrichtung auszugeben, wobei die Ansteuereinrichtung mit diesem Ausgang verbunden ist und
- wobei die Vorrichtung eine Mittelungseinrichtung umfasst, die die beiden Winkelsignale hinsichtlich ihres zugehörigen Winkels mittelt, wobei die Mittelungseinrichtung mit dem Winkeleingang verbunden ist, um einen gemittelten Winkel an diesen abzugeben, um die Ansteuerungsvorrichtung gemäß diesem Winkel anzusteuern.

9. Vorrichtung nach Anspruch 8, die ferner eine Startvorrichtung umfasst, in der Startwinkel eingespeichert sind, wobei die Startvorrichtung mit dem Winkeleingang verbunden ist, um an diesem die Startwinkel zu übertragen.

10. Vorrichtung nach Anspruch 8, die ferner einen Subtrahierer umfasst, der eingerichtet ist, den Differenzbetrag zwischen zwei Spitzenwerten zu vergleichen, wobei eine Doppelwinkelvorrichtung aus dem an dem Winkeleingang anliegenden Winkelsignal zwei verschiedene Winkelsignale an einem Doppelwinkelausgang erzeugt, die um den gleichen Winkeldifferenzbetrag von dem am Winkeleingang anliegenden Winkelsignal abweichen, und der Winkeleingang mit der Doppelwinkelvorrichtung verbunden ist, wodurch die Ansteuervorrichtung zwei Spannungsimpulse gemäß den zwei verschiedenen Winkelsignalen erzeugt.

## Claims

1. Method for determining the angular position of a synchronous machine having a magnetically anisotropic rotor, comprising:
- an (m) iteration step which comprises:
- generating an (m) magnetic field with an (m) angle direction and a strength, which changes over time, by applying an (m) voltage pulse to the synchronous machine and detecting an (m) peak value of the current pulse which is generated by the (m) voltage pulse; and
- providing further (m+i) peak values which are generated in different (m+i) angle directions by magnetic fields, the said (m+i) angle directions differing from the (m) angle direction;
- an (n) iteration step which follows the (m) iteration step and comprises:
- determining the angle directions, in which the two largest or the two smallest peak values from a group of peak values occur, as an (n+1) angle direction and an (n+2) angle direction, wherein the group of peak values comprises the (m) peak value and the further (m+i) peak values; and
- providing an (n) angle direction, which is situated between the (n+1) angle direction and the (n+2) angle direction, as the angle direction output, or, if an even higher degree of accuracy is desired, providing an (n) angle direction, which is situated between the (n+1) angle direction and the (n+2) angle direction, as the (n) angle direction in which an (n) magnetic field having a strength which changes over time is produced by applying an (n) voltage pulse to the synchronous machine, in order to detect an (n) peak value of the current pulse which is generated by the (n) voltage pulse.

2. Method according to Claim 1, comprising a start iteration step which is executed before the (m) iteration step and which comprises:
providing the rotor at a standstill;
generating at least three start magnetic fields in different start angle directions with a strength, which changes over time, by applying start voltage pulses and detecting the associated start peak values of the start current pulses which are generated by the respective start voltage pulses; wherein adjacent start angle directions are spaced apart from one another by the same distance angle in each case; determining the two start angle directions in which the two largest or the two smallest peak values of all start peak values occur;
providing the (m) angle direction as an angle direction which is situated between the two determined start angle directions; and
providing the (m+i) angle directions as the two determined start angle directions.

3. Method according to Claim 1, wherein generating the magnetic fields having strengths which change over time comprises: applying a predefined voltage pulse to a stator winding or in a distributed manner to a plurality of stator windings, and the predefined voltage pulse has a predefined profile.

4. Method according to Claim 1, wherein providing an angle direction which is situated between two angle directions comprises: providing the angle direction as the sum of the two angle directions divided by two or providing the angle direction as the sum of the two angle directions which are weighted in accordance with a respective weighting factor, wherein the more the associated magnitude of the peak value differs from the smallest or from the largest peak value of the group of peak values, the smaller the respective weighting factor.

5. Method according to Claim 1, wherein determining the angle directions in which the two largest or the two smallest peak values from a group of peak values occur comprises: determining the angle directions in which the two smallest peak values from a group of peak values occur when the synchronous machine is a synchronous machine which is excited by means of a permanent magnet, and determining the angle directions in which the two largest peak values from a group of peak values occur when the synchronous machine is a synchronous machine which is excited by means of a field winding.

6. Method according to Claim 1, wherein generating a magnetic field with an angle direction and detecting a peak value comprises: generating a magnetic field which runs along the angle direction by suitable distribution of the voltage pulse to various stator windings which each generate magnetic field components which run along the angle direction in an added manner; and detecting the current in a line, to which the voltage pulse is applied, by means of a shunt resistor, by means of a Hall sensor or an indirect current detection apparatus, or wherein generating a magnetic field in an angle direction and detecting a peak value comprises in succession: generating two magnetic fields which are offset by the same angle difference from the angle direction on the two sides of the angle direction, by suitable distribution of the voltage pulses to various stator windings, wherein the angle difference corresponds to a quarter of the total angle of 360°/p, where p is the number of magnetic poles of the rotor; and detecting the difference between the magnitudes of the current peak values, wherein the angle direction corresponds to the mean of the angle directions of the two magnetic fields.

7. Method according to Claim 1, which further comprises: a step of absolute orientation, wherein the step comprises: providing rotor excitation by providing a permanent magnet or by energizing a field winding, generating orientation magnetic fields having an strength which changes over time in all angle directions, 0° and 360°/p, where p is the number of magnetic poles of the rotor; detecting the orientation peak values of the current pulse which was generated by the orientation voltage pulses; and determining the smallest or the largest orientation peak value and the associated angle direction; and angle of the absolute orientation angle sector in which the associated angle direction lies.

8. Apparatus for carrying out the method according to Claim 1, comprising:
- one or more current sensors, a voltage pulse generator and an actuation apparatus which is connected to the said voltage pulse generator and has an angle input,
- wherein the actuation apparatus distributes the voltage which is generated by the voltage pulse generator to outputs, which are designed for connection of the synchronous motor, in such a way that the synchronous motor which can be connected generates a field, the direction of which corresponds to an angle signal which is applied to the angle input;
- wherein the current sensors are connected to the outputs in order to detect the currents flowing through the outputs;
- wherein the apparatus further comprises a comparison apparatus which is designed to compare the current pulses, which were generated by voltage pulses at different angle signals, in order to detect the two largest or smallest of all current pulses and the two associated angle signals and to output the two associated angle signals at an output of the comparison apparatus, wherein the actuation device is connected to this output, and
- wherein the apparatus comprises an averaging device which averages the two angle signals in terms of their associated angle, wherein the averaging device is connected to the angle input in order to output an averaged angle to the said angle input in order to actuate the actuation apparatus in accordance with this angle.

9. Apparatus according to Claim 8, which further comprises a start apparatus in which start angles are stored, wherein the start apparatus is connected to the angle input in order to transmit the start angles to the said angle input.

10. Apparatus according to Claim 8, which further comprises a subtraction device which is designed to compare the difference between two peak values, wherein a double angle apparatus generates two different angle signals at a double angle output from the angle signal which is applied to the angle input, which two angle signals differ by the same angle difference from the angle signal which is applied to the angle input, and the angle input is connected to the double angle apparatus, as a result of which the actuation apparatus generates two voltage pulses in accordance with the two different angle signals.

## Revendications

1. Procédé de détermination de la position angulaire d'une machine synchrone avec un rotor magnétiquement anisotrope, comprenant :
- un niveau d'itération (m), comprenant :
- la génération d'un champ magnétique (m) d'une direction angulaire (m) avec une intensité variable dans le temps par l'application d'une impulsion de tension (m) à la machine synchrone, et la détection d'une valeur de crête (m) de l'impulsion de courant générée par l'impulsion de tension (m) ; et
- la fourniture de valeurs de crête supplémentaires (m+i) qui sont générées par des champs magnétiques dans différentes directions angulaires (m+i) qui se distinguent de la direction angulaire (m) ;
- un niveau d'itération (n) suivant le niveau d'itération (m) et comprenant :
- la détermination des directions angulaires dans lesquelles surviennent les deux plus grandes valeurs de crête ou les deux plus petites valeurs de crête dans un groupe de valeurs de crête comme une direction angulaire (n+1) et une direction angulaire (n+2), le groupe de valeurs de crête comprenant la valeur de crête (m) ainsi que les valeurs de crête supplémentaires (m+i) ; et
- la fourniture d'une direction angulaire (n) située entre la direction angulaire (n+1) et la direction angulaire (n+2) comme une sortie de position angulaire, ou si une précision encore plus élevée est souhaitée, la fourniture d'une direction angulaire (n) située entre la direction angulaire (n+1) et la direction angulaire (n+2) comme la direction angulaire (n) dans laquelle un champ magnétique (n) est généré avec une intensité variable dans le temps par l'application d'une impulsion de tension (n) à la machine synchrone afin de détecter une valeur de crête (n) de l'impulsion de courant générée par l'impulsion de tension (n).

2. Procédé selon la revendication 1, avec un niveau d'itération de démarrage exécuté avant le niveau d'itération (m) et comprenant :
la fourniture du rotor à l'arrêt ;
la génération d'au moins trois champs magnétiques de démarrage dans différentes directions angulaires de démarrage d'une intensité variable dans le temps par l'application d'impulsions de tension de démarrage et la détection des valeurs de crête de démarrage associées des impulsions de courant de démarrage générées par les impulsions de tension de démarrage respectives ; des directions angulaires de démarrage voisines étant respectivement espacées d'un même angle de distance les unes des autres ; la détermination des deux directions angulaires de démarrage dans lesquelles surviennent les deux plus grandes valeurs de crête ou les deux plus petites valeurs de crête de toutes les valeurs de crête de démarrage ;
la fourniture de la direction angulaire (m) comme une direction angulaire située entre les deux directions angulaires de démarrage déterminées ; et
la fourniture des directions angulaires (m+i) comme les deux directions angulaires de démarrage déterminées.

3. Procédé selon la revendication 1, dans lequel la génération des champs magnétiques d'intensité variable dans le temps comprend : l'application d'une impulsion de tension prédéfinie à un enroulement de stator ou de manière distribuée sur plusieurs enroulements de stator, et l'impulsion de tension prédéfinie présente une courbe prédéfinie.

4. Procédé selon la revendication 1, dans lequel la fourniture d'une direction angulaire située entre deux directions angulaires comprend : la fourniture de la direction angulaire comme la somme des deux directions angulaires, divisée par deux, ou la fourniture de la direction angulaire comme la somme des deux directions angulaires pondérées selon un facteur de pondération respectif, le facteur de pondération respectif étant d'autant plus petit que la quantité associée de la valeur de crête diffère par rapport à la plus petite ou la plus grande valeur de crête du groupe de valeurs de crête.

5. Procédé selon la revendication 1, dans lequel la détermination des directions angulaires dans lesquelles surviennent les deux valeurs de crête les plus grandes ou les deux valeurs de crête les plus petites d'un groupe de valeurs de crête comprend : la détermination des directions angulaires dans lesquelles surviennent les deux plus petites valeurs de crête dans un groupe de valeurs de crête lorsque la machine synchrone est une machine synchrone excitée au moyen d'un aimant permanent, et la détermination des directions angulaires dans lesquelles surviennent les deux plus grandes valeurs de crête d'un groupe de valeurs de crête lorsque la machine synchrone est une machine synchrone excitée au moyen d'un enroulement inducteur.

6. Procédé selon la revendication 1, dans lequel la génération d'un champ magnétique d'une direction angulaire et la détection d'une valeur de crête comprennent : la génération d'un champ magnétique s'étendant suivant la direction angulaire par une distribution appropriée de l'impulsion de tension sur différents enroulements de stator qui génèrent respectivement des composantes de champ magnétique s'étendant en somme suivant la direction angulaire ; et la détection du courant sur une ligne à laquelle est appliquée l'impulsion de tension, au moyen d'une résistance de dérivation, au moyen d'un capteur à effet Hall ou d'un dispositif de détection de courant indirecte, ou dans lequel la génération d'un champ magnétique dans une direction angulaire et la détection d'une valeur de crête comprennent successivement : la génération de deux champs magnétiques décalés de la même différence angulaire par rapport à la direction angulaire des deux côtés de la direction angulaire par une distribution adéquate des impulsions de tension sur différents enroulements de stator, la différence angulaire correspondant à un quart d'un angle total de 360°/p, p étant le nombre des pôles magnétiques du rotor ; et la détection de la différence des grandeurs des valeurs de crête de courant, la direction angulaire correspondant au centre des directions angulaires des deux champs magnétiques.

7. Procédé selon la revendication 1, comprenant en outre : une étape d'orientation absolue, l'étape comprenant : la fourniture d'une excitation d'induit par la fourniture d'un aimant permanent ou la mise sous tension d'un enroulement inducteur, la génération de champs magnétiques d'orientation avec une intensité variable dans le temps dans toutes les directions angulaires, 0° et 360°/p, p étant le nombre des pôles magnétiques du rotor ; la détection des valeurs de crête d'orientation de l'impulsion de courant générée par les impulsions de tension d'orientation ; et la détermination de la plus petite ou de la plus grande valeur de crête d'orientation et de la direction angulaire associée ; et de l'angle du secteur angulaire d'orientation absolue dans lequel se situe dans la direction angulaire associée.

8. Dispositif permettant d'exécuter le procédé selon la revendication 1, comprenant :
- un ou plusieurs capteurs de courant, un générateur d'impulsion de tension et un dispositif de pilotage connecté à celui-ci et présentant une entrée d'angle,
- dans lequel le dispositif de pilotage distribue la tension générée par le générateur d'impulsion de tension sur des sorties aménagées pour brancher le moteur synchrone de telle sorte que le moteur synchrone pouvant être branché génère un champ dont la direction correspond à un signal d'angle appliqué à l'entrée d'angle ;
- dans lequel les capteurs de courant sont connectés aux sorties pour détecter les courants passant par les sorties ;
- dans lequel le dispositif comprend en outre un dispositif de comparaison aménagé pour comparer les impulsions de courant qui ont été générées par des impulsions de tension pour différents signaux d'angle afin de détecter les deux plus grandes ou plus petites de toutes les impulsions de courant et les deux signaux d'angle associés et de sortir les deux signaux d'angle associés au niveau d'une sortie du dispositif de comparaison, le dispositif de pilotage étant relié à cette sortie, et
- dans lequel le dispositif comprend un dispositif de calcul de moyenne qui calcule la moyenne des deux signaux d'angle quant à leur angle associé, le dispositif de calcul de moyenne étant relié à l'entrée d'angle pour lui fournir un angle moyenné afin de piloter le dispositif de pilotage selon cet angle.

9. Dispositif selon la revendication 8, comprenant en outre un dispositif de démarrage dans lequel sont enregistrés des angles de démarrage, le dispositif de démarrage étant relié à l'entrée d'angle afin de lui transmettre l'angle de démarrage.

10. Dispositif selon la revendication 8, comprenant en outre un soustracteur aménagé pour comparer la différence entre les deux valeurs de crête, un dispositif d'angle double générant à partir du signal d'angle appliqué à l'entrée d'angle deux signaux d'angle différents au niveau d'une sortie d'angle double qui diffèrent de la même différence angulaire du signal d'angle appliqué à l'entrée d'angle, et l'entrée d'angle étant reliée au dispositif d'angle double, de sorte que le dispositif de pilotage génère deux impulsions de tension selon les deux signaux d'angle différents.
